# EUROPEAN PATENT SPECIFICATION

(11) **EP 3 129 924 B1**
(45) Date of publication and mention of the grant of the patent: **14.03.2018**
(21) Application number: 14733316.5
(22) Date of filing: 15.04.2014
(51) Int. Cl.: G06Q 10/00

(54) **SYSTEM FOR CHECKING THE AUTHENTICITY OF CONSUMER GOODS, PRODUCTS AND OBJECTS IN GENERAL**
SYSTEM ZUR PRÜFUNG DER AUTHENTIZITÄT VON KONSUMGÜTERN, PRODUKTEN UND OBJEKTEN IM ALLGEMEINEN
SYSTÈME PERMETTANT DE VÉRIFIER L'AUTHENTICITÉ DE BIENS DE CONSOMMATION, DE PRODUITS ET D'OBJETS EN GÉNÉRAL

(30) Priority: 08.04.2014 IT PD20140096
(43) Date of publication of application: 15.02.2017
(73) Proprietor: Tognazzo, Giorgia, 35127 Padova (IT)
(72) Inventor: Tognazzo, Giorgia, 35127 Padova (IT)
(74) Representative: Gallo, Luca
(86) International application number: PCT/IB2014/060729
(87) International publication number: WO 2015/155577

(56) References cited:
- EP-A1- 2 535 850
- WO-A1-2008/060242
- FR-A1- 2 986 357
- US-A1- 2005 064 867
- US-A1- 2009 289 775
- US-A1- 2010 127 871

## Description

This patent relates to computer systems for the control and verification of the authenticity of products and in particular concerns a new system for the control and verification of the authenticity of consumer goods, products, and objects in general.

The phenomenon of counterfeit products in general is well known. This involves the production of products which are then marketed under false names, regarding for example the brand name, quality, origin, standards applied, or the like.

It is well known that the counterfeiting of products creates serious damage for the economies of all producer countries, since products that are not compliant with applicable laws are put on the market, hindering the regular markets with losses of millions of Euros and jobs as a result.

Some examples of highly counterfeited products are audio and/or video CDs and DVDs, food in general, branded clothing and accessories (shirts, sweaters, bags, coats, underwear, etc.), cosmetic products (perfumes, etc.) electronic devices and products, toys and children's products in general, gadgets and promotional items for businesses (key rings, badges, pens, lighters, etc.), sunglasses, watches, as well as documents such as securities of different kinds including banknotes, and identity documents.

Thus the need to create systems that make the traceability of each individual item and the verification of its authenticity possible is known.

There are currently various systems and devices designed to control and verify the traceability of products. For example, there are labels applied to the product, adhesive or fastened by ties or staples, showing the product data. Obviously, these labels can be easily counterfeited.

There are also labels containing transponders or microchips or RFID tags, which contain information relating to the product and communicate that information to a reading device that interrogates them by emitting low frequency radio waves.

NFC (Near Field Communication) is a communication technology between two electronic devices where the data transmission takes place by simply bringing the two devices near one another.

This technology is also used for the transmission of data between an electronic device used as a reader and a transponder.

Similarly to the labels, even transponders can be counterfeited, as can electronic devices such as mobile phones or smartphones that use so-called "open source" operating systems which can be easily violated.

FR 2986357 discloses a known system for identify users of a premises selling optical items, which comprises RFID markers attached to the glasses and a RFID reader detecting and reading the RFID markers and communicating with a computer to access to a database containing the information associated to the RFID markers.

EP 2535850 discloses a known system for loading dock areas which comprises more RFID tags attached to objects carried by industrial trucks, and more RFID readers placed underground and detecting the RFID tags to communicate to a computer the position of the objects on the loading dock area.

US 2009/0289775 discloses a known system for identifying commodities, which comprises RFID tags attached to the articles, a RFID reader which reads the code of the RFID tags and communicates with a terminal configured to show on a display information stored in a database and concerning the articles. US 2010/0127871 discloses a known system for identifying shipped products which comprises RFID tags attached to the products and a RFID reader reading the RFID tags and communicating with a server which sends to the RFID reader information of the products.

US 2005/0064867 discloses a known system for sharing information, which comprises a RFID tag attached to a poster and a mobile terminal reading the RFID tag and communicating with a server which sends the information of the poster to another mobile terminal.

The systems of the known type disclosed in the above mentioned patents FR 2986357, EP 2535850, US 2009/0289775, US 2010/0127871 and US 2005/0064867 do not allow to verify the authenticity of a product.

Patent application WO 2008/060242 discloses a known system for software copyright protection which comprises a RFID tag attached to a software package and containing a licensing key. Moreover, the system comprises a RFID reader (built in the mother-board of the computer) which interrogates the RFID tag to receive the licensing key, so that the computer can extract the information for installing the software.

The system disclosed in WO 2008/060242 is not intrinsically safe, since, if an infringer obtain the licensing key, he can reproduce illegally the software without the possibility to check the authenticity of the product.

To overcome the aforesaid drawbacks a new type of system for the control and verification of the authenticity of consumer goods, products, and items in general has been designed and developed.

The main purpose of the present invention is to provide for the control and verification of the authenticity of any type of product, in real time and by any person, since it uses easily accessible technology.

The system can also be applied to check a single item.

Another purpose of the present invention is to ensure security, making the system resistant to violations and copying.

These and other purposes, direct and complementary, are achieved by the new system to control and verify the authenticity of consumer goods, products and items in general. The new system uses NFC (Near Field Communication) and RFID technology, where the data transmission is bidirectional, that is, there is an exchange of data from both the device to one or more transponders but also from those one or more transponders to the device.

The new system also includes at least one support server for the application on the reading device, that is, for example a mobile phone, in order to prevent violations of the system.

The present invention has the following advantages: compact size and thickness, high flexibility, complete impermeability, low production costs, and ease of management, making the invention accessible to a very wide band of users, who can use it for commercial or personal and private purposes.

The new system is particularly effective when applied as a control system for use by law enforcement, which, during routine checks in shops, street markets, customs, warehouses, etc. can ascertain the authenticity of the product and all information regarding compliance and origin, and where such checks can be made securely, in real time, without loss of time.

The new system is effectively and easily used by any operator without the need for any special preparation and training since the operator must use a reading device, for example a mobile phone, and does not have to do anything other than put the device near the item/product to test.

The result of the verification, positive or negative, arrives at the reading device automatically and error-free.

The new system is also effectively used by any purchaser or consumer at the time of selection, purchase or consumption of the product by means of a software application installed on the device or electronic terminal in his/her possession, such as a smartphone, tablet, or the like. The system involves the installation of special software for each of the operating systems currently used, such as "Android", "I-phone", etc.

In this way any consumer or purchaser may verify the authenticity of a product at any time, before or after the purchase.

In its main parts the new system comprises:
- one or more working microchips with an RFID - NFC reading system, adhesive or not, made of plastic or paper or genetically composite material, rigid or flexible, with various possible measurements, able to run programs or mathematical calculations, and containing at least one alphanumeric code, this one or more microchips being applied, incorporated or otherwise fastened to a product to be tracked or to its wrapper or packaging;
- at least one reader or reading device containing at least one data transmission and reception circuit;
- at least one central server for the reception, transmission, processing, and storage of data.

This reader or reading device in particular preferably communicates through a NFC module and/or GSM and/or UMTS and/or the Internet or the like. In the preferred embodiment, this reader in turn comprises an electronic device such as a mobile phone, smartphone, or tablet, equipped with an NFC device and at least one dedicated software application or "App".

This software application or "App" is preferably downloadable from a web site authorized by one or more producers of items/products to be verified. This prevents the use of non-genuine software, that is, fake copies made by counterfeiters, thus ensuring the certainty of certifications, and wherein that software application contains within it all the correct and authorized parameters to connect to that server without the possibility of viewing by unauthorized third parties.

This software may also be installed in the reader via a direct cable connection to a terminal that contains the authorized application software, this terminal for example being located within the official and certified store in which the product/item is located.

This microchip is produced by an integrated circuit production system, or it can be attached to or embedded in the product.

The following is a description of the operation of the new system.

The FC-RFID microchip is, as mentioned, inserted or otherwise applied to the product to be traced and placed on it is a program to generate a unique alphanumeric identification code.

When the microchip is queried via NFC technology by the reader or electronic reading device, such as a mobile phone with the enabled application software, the microchip sends a unique identification code, which could for example be 64 or 128 bits.

The reading device, reader, mobile phone or the like receives the unique identification code, and sends it to the FTP server via a connection to a local or global (Internet) network or GSM communication or the like.

The FTP server, equipped with a calculation and alphanumeric control system, receives the unique identification code, processes it with one or more specific algorithms generating a new code, or return code, which is then sent to the reading device.

The reading device, in turn, sends it to the microchip applied to the product to be traced via NFC communication.

The microchip reconstructs the algorithm(s) in order to process the return code and server information, and sends back a final success code with the response to the device. Otherwise, when the return code received from the server is not considered valid, the microchip sends a final fail code with the response to the reading device.

This return code can in fact only be recognized by the microchip that generated the initial unique identification code, as it is linked to it through the system of algorithms.

This exchange of codes occurs in real time.

The NFC - RFID technology microchip is thus equipped with a bidirectional communication system, which provides for the transmission and reception of data and the capacity for computing and/or running the dedicated software. The microchip is also readable by means of NFC technology that, in combination with the cross-checked code control system, makes the system secure.

The reading device and software application do not know the algorithms, thereby preventing the risk of a breach of the device's information system. In fact, usually smartphones use "Android" operating systems that are easily subject to external attacks that could copy these algorithms.

In order to further limit the risk of a breach of the system, an additional step of data transmission between the microchip applied to the item and the server can also be added.

To prevent violations of the algorithm contained in the server, the server is in turn connected to an external protected card so that the reading device and the server essentially work as transceivers of data between the NFC- RFID microchip and the processing card connected to the server.

This system can therefore be used by anyone who is in possession of an electronic device with NFC technology and with the application software installed and enabled. In addition, this system allows law enforcement to quickly check goods at any time and in any place.

In another embodiment, particularly useful for use by law enforcement or personnel dedicated to the verification of products, the reader and server are connected by wire and even integrated in a single device, such as a laptop computer.

The development of the microchip's and/or the server's software, may include the product history like for example, data relating to its production, traceability, import status and so on.

For example, the data introduced in the microchip at the time of production can be sent and stored in the server which, in turn, divides the products by production lots, date of production, country of production, and the data that identifies the product itself, further enabling better tracing.

The reader or reading device includes, in addition to NFC technology, even a SFM card for data transmission via SMS and/or through an INTERNET connection or the like (UMTS, GSM, GPRS, etc.).

The server may be located anywhere, but preferably in a designated centre with appropriate technical support.

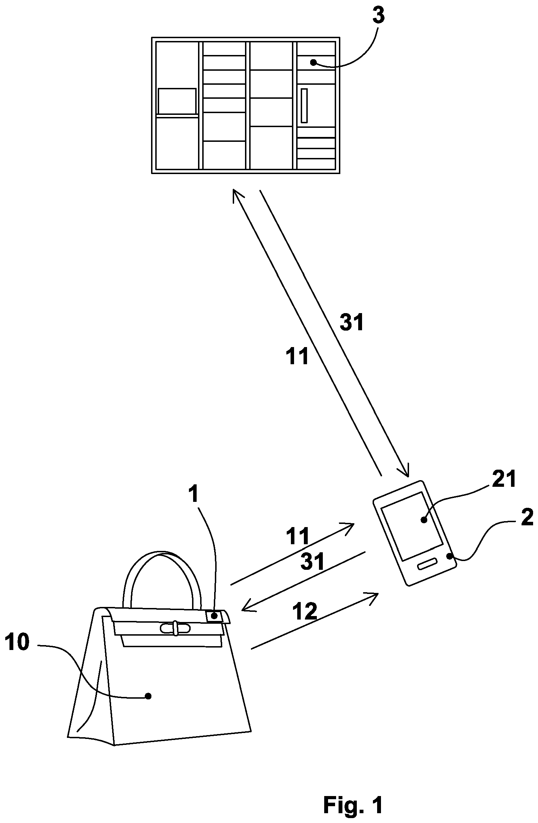

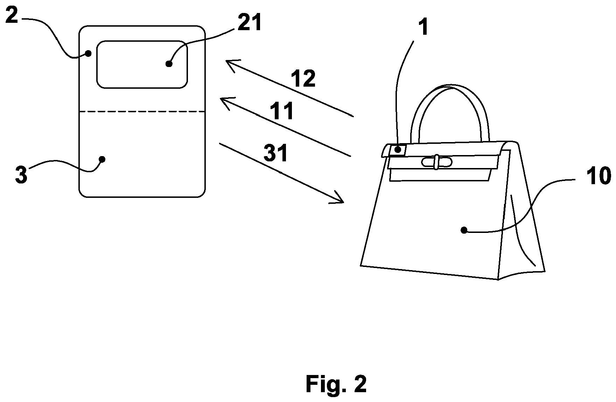

The attached drawings, Figures 1 and 2, show, by way of a non-limiting example, the operation of the new system.

The new system comprises at least one microchip (1), with an RFID - NFC reading system applied on a product (10) the authenticity of which is to be checked. The microchip (1) contains a unique identification code (11), for example, a 64 or 128 bit alphanumeric code.

In the example in Figure 1, the system also comprises at least one reader or reading device (2), which can be, for example, a dedicated reading device or a normal smartphone, tablet, or other electronic device which in turn works with NFC technology and is able to communicate with GSM, UMTS, or GPRS technology, or by connection to a local or global network (Internet). This reading device (2) also preferably comprises at least one identification SIM card.

At least one dedicated software application or "App" is installed in the reading device that enables the smooth operation of the system.

The new system also includes at least one centralized FTP server (3) for the reception, transmission, processing, and storage of data.

To verify the authenticity of the product (10) the user must bring the reading device (2) near the microchip (1), that is, near the product (10) on which the microchip is applied, and must activate the software application installed in the reading device (2).

The microchip (1) is then interrogated (21) and in response sends the identification code (11) to the reading device (2).

The reading device (2) receives the unique identification code (11) and sends it, via connection to a local or global (Internet) network, or GSM communication or the like, to the FTP server (3).

The FTP server (3), equipped with an alphanumeric control system, receives the unique identification code (1 1), processes it with one or more specific algorithms generating a new code, or return code (31), which is sent to the reading device (2).

The reading device (2), in turn, via NFC communication, sends it to the microchip (1) applied on the product to be traced (10).

The microchip (1) reconstructs the algorithm(s) in order to recognize the return code (31) and the server (3), and when recognized, sends a final success or failure code (12) back to the reading device (2).

The final code (12) appears, for example, on a display (21) of the reading device (2) or a beep or voice message is emitted. In contrast, in the example in Figure 2 the reading device (2) and server (3) are mutually connected by cable or even integrated into a single device, such as a laptop computer. This solution is particularly useful because it enables the reading device (2) to be used effectively even in the absence of network coverage whether wired or wireless, since it is directly connected to the server (3) for the processing of the codes. These specifications are sufficient for the expert person to make and use the invention, as a result, in the practical application there may be variations without prejudice to the substance of the innovative concept.

Therefore, with reference to the preceding description and the attached drawings the following claims are made.

## Claims

1. System for the control and verification of the authenticity of consumer goods, products, and items in general (10), comprising at least one microchip (1) with NFC communication technology, suited to be applied to an item/product/package (10), said microchip (1) having the capability of running software and containing at least one identification code (11), and at least one reading device (2), suited to communicate with said microchip (1), at least one server (3) for the processing, communication and storage of data and wherein said reading device (2) is suited to exchange one or more identification codes (1 1, 31) in both directions between said microchip (1) and said server (3), wherein said microchip (1) implements the control of said codes (11, 31) and sends a final identification code (12) to said reading device (2) regarding the successful or failed identification, and wherein:
• said microchip (1) is intended to be applied to said item/product/package (10) to be checked during the production of the item/product/package (1) itself;
• said reading device (2) is suited to interrogate said microchip (1) which in response sends at least said identification code (11);
• said reading device (2) is suited to send said identification code (11) to said server (3);
• said server (3) is suited to process said identification code (11) received by said reading device (2) by means of one or more dedicated algorithms, generating a return code (31), which it sends to said reading device (2);
• said reading device (2) is suited to send said return code (31) received from said server (3) to said microchip (1); **characterised in that**
• said microchip (1) is suited to process said return code (31) received from said reading device (2) with one or more algorithms and to send a response of recognition or non-recognition to said reading device (2);
the return code (31) being only recognized by said microchip (1) that generated the initial unique identification code (11), the return code (31) being linked to the identification code (11) through the system of algorithms.

2. System according to claim 1, **characterized in that** said reader (2) is associated with a mobile phone, smartphone, tablet or other electronic device with NFC technology comprising at least one data receiving and transmission circuit by means of at least one NFC and/or GSM and/or UMTS and/or the Internet module or the like, with which it communicates with said server (3).

3. System according to claim 1, **characterized in that** said reader (2) is connected by cable or wireless to said server (3).

4. System according to claim 3, **characterized in that** said reader (2) and said server (3) are integrated in a single device, whether portable or nonportable.

5. System according to the preceding claims, **characterized in that** said microchip (1) reconstructs the algorithm(s) in order to recognize said return code (31) and said server (3), and when recognized, sends a final code (12) back to said reading device (2) communicating the successful or failed recognition of the item in question.

6. System according to the preceding claims, **characterized in that** said reading device (2) comprises at least one dedicated software application or "App" for the transmission of data from/to said microchip (1) and from/to said server (3), wherein said software application is installed on said reading device (2) via a wired or wireless connection to an authorized local or remote terminal.

7. System according to the preceding claims, **characterized in that** said server (3) is a centralized FTP type for the reception, transmission, processing, and storage of data.

8. System according to the preceding claims, **characterized in that** said exchange of codes (11, 31, 12) occurs in real time.

9. System according to the preceding claims, **characterized in that** said microchip (1) and said server (3) are each suited to mutually transmit two or more of said codes (11, 31) by means of said reading device (2).

10. System according to the preceding claims, **characterized in that** it comprises a protected external card connected to said server (3), and wherein said server (3) transmits said codes (11) received from said reading device (2), and wherein said card is suited to generate said return code (31) that it sends to said server (3).

## Patentansprüche

1. System zur Prüfung der Authentizität von Konsumgütern, Produkten und Objekten im Allgemeinen (10), umfassend mindestens einen Mikrochip (1) mit NCF-Kommunikationstechnologie, der sich für die Applikation an einem/einer Objekt/Produkt/Verpackung (10) eignet, wobei der genannte Mikrochip (1) die Fähigkeit besitzt, Software zu verwenden und mindestens einen Identifizierungscode (11) und mindestens eine Lesevorrichtung (2), die geeignet ist, mit dem genannten Mikrochip (1) zu kommunizieren, mindestens einen Server (3) zur Verarbeitung, Kommunikation und Speicherung von Daten enthält und bei dem die genannte Lesevorrichtung (2) geeignet ist, einen oder mehrere Identifizierungscodes (11, 31) in beiden Richtungen zwischen dem genannten Mikrochip (1) und dem genannten Server (3) auszutauschen, bei dem der genannte Mikrochip (1) die Kontrolle der genannten Codes (11, 31) implementiert und einen endgültigen Identifizierungscode (12) an die genannte Lesevorrichtung (2) sendet, der die erfolgreiche oder fehlgeschlagene Identifizierung betrifft, und bei dem:
- der genannte Mikrochip (1) auf dem/der genannten Objekt/Produkt/Verpackung appliziert werden soll, um während der Produktion des/der Objekts/Produkts/Verpackung(1) kontrolliert zu werden;
- die genannte Lesevorrichtung (2) geeignet ist, den genannten Mikrochip (1) zu befragen, der als Antwort mindestens den genannten Identifizierungscode (11) überträgt;
- die genannte Lesevorrichtung (2) geeignet ist, den genannten Identifizierungscode (11) an den genannten Server (3) zu übertragen;
- der genannte Server (3) geeignet ist, den von der genannten Lesevorrichtung (2) erhaltenen genannten Identifizierungscode (11) mit Hilfe eines oder mehrerer spezieller Algorithmen zu verarbeiten und dabei einen Antwortcode (31) generiert, den er an die genannte Lesevorrichtung (2) zurücksendet;
- die genannte Lesevorrichtung (2) geeignet ist, den von dem genannten Server (3) erhaltenen genannten Antwortcode (31) an den genannten Mikrochip (1) zu übertragen;
**dadurch gekennzeichnet, dass**
- der genannte Mikrochip (1) geeignet ist, den von der genannten Lesevorrichtung (2) erhaltenen genannten Antwortcode (31) mit einem oder mehreren speziellen Algorithmen zu verarbeiten und eine Antwort des Erkennens oder Nichterkennens an die genannte Lesevorrichtung (2) zu übertragen;
wobei der Antwortcode (31) nur von dem genannten Mikrochip (1) erkannt wird, der den anfänglichen eindeutigen Identifizierungscode (11) generiert hat, da der Antwortcode (31) durch ein aus Algorithmen bestehendes System mit dem Identifizierungscode (11) verbunden ist.

2. System nach Anspruch 1, **dadurch gekennzeichnet, dass** die genannte Lesevorrichtung (2) mit einem Mobiltelefon, Smartphone, Tablet oder einem anderen elektronischen Gerät mit NFC-Technologie verknüpft ist, das mindestens einen mit Hilfe mindestens eines NFC und/oder GSM- und/oder UMTS- und/oder des Internet-Moduls oder Ähnlichem eingerichteten Datenempfangs- und Datensendekreis umfasst, mit dem es mit dem genannten Server (3) kommuniziert.

3. System nach Anspruch 1, **dadurch gekennzeichnet, dass** die genannte Lesevorrichtung (2) per Kabel oder drahtlos mit dem genannten Server (3) verbunden ist.

4. System nach Anspruch 3, **dadurch gekennzeichnet, dass** die genannte Lesevorrichtung (2) und der genannte Server (3) in ein einziges tragbares oder nicht tragbares Gerät eingebaut sind.

5. System nach den vorangegangenen Ansprüchen, **dadurch gekennzeichnet, dass** der genannte Mikrochip (1) den/die Algorithmus/men rekonstruiert, um den genannten Antwortcode (31) und den genannten Server (3) zu erkennen und nach dem Erkennen einen endgültigen Code (12) an die genannte Lesevorrichtung (2) zurücksendet und das erfolgreiche oder fehlgeschlagene Erkennen des betreffenden Objekts mitteilt.

6. System nach den vorangegangenen Ansprüchen, **dadurch gekennzeichnet, dass** die genannte Lesevorrichtung (2) mindestens eine dedizierte Softwareapplikation oder "App" für die Übertragung der Daten von dem / an den genannten Mikrochip (1) und von dem / an den genannten Server (3) umfasst, wobei die genannte Softwareapplikation auf der genannten Lesevorrichtung (2) mittels verkabelter oder drahtloser Verbindung an ein zugelassenes lokales oder Fernendgerät installiert ist.

7. System nach den vorangegangenen Ansprüchen, **dadurch gekennzeichnet, dass** es sich bei dem genannten Server (3) um einen zentralisierten FTP-Server für Empfang, Übertragung, Verarbeitung und Speicherung von Daten handelt.

8. System nach den vorangegangenen Ansprüchen, **dadurch gekennzeichnet**, das der genannte Austausch von Codes (11, 31, 12) in Echtzeit erfolgt.

9. System nach den vorangegangenen Ansprüchen, **dadurch gekennzeichnet, dass** der genannte Mikrochip (1) und der genannte Server (3) jeweils so angeordnet sind, dass sie gegenseitig zwei oder mehrere der genannten Codes (11, 31) mit Hilfe der genannten Lesevorrichtung (2) übertragen.

10. System nach einem der vorangegangenen Ansprüche, **dadurch gekennzeichnet, dass** es eine an den genannten Server (3) angeschlossene geschützte externe Karte umfasst, und bei dem der genannte Server (3) die von der genannten Lesevorrichtung (2) erhaltenen genannten Codes (11) überträgt und bei dem die genannte Karte geeignet ist, den genannten Antwortcode (31) zu generieren, den sie an den genannten Server (3) überträgt.

## Revendications

1. Système permettant de vérifier l'authenticité de biens de consommation, de produits et d'objets en général (10) comprenant au moins une microplaquette (1) avec technologie de communication NFC, apte à être appliquée à un objet/produit/emballage (10), ladite microplaquette (1) ayant la capacité d'exploiter un logiciel et contenant au moins un code d'identification (11) et au moins un dispositif de lecture (2), apte à communiquer avec ladite microplaquette (1), au moins un serveur (3) pour le traitement, la communication et le stockage des données et dans lequel ledit dispositif de lecture (2) est apte à échanger un ou plusieurs codes d'identification (11, 31) dans les deux sens entre ladite microplaquette (1) et ledit serveur (3), dans lequel ladite microplaquette (1) met en oeuvre le contrôle desdits codes (11, 31) et envoie un code d'identification final (12) audit dispositif de lecture (2) concernant une identification réussie ou échouée et dans lequel :
• ladite microplaquette (1) est destinée à être appliquée auxdits objet/produit/emballage (1) ;
• ledit dispositif de lecture (2) est apte à interroger ladite microplaquette (1) laquelle en réponse envoie au moins ledit code d'identification (11) ;
• ledit dispositif de lecture (2) est apte à envoyer ledit code d'identification (11) audit serveur (3) ;
• ledit serveur (3) est apte à traiter ledit code d'identification (11) reçu par ledit dispositif de lecteur (2) au moyen d'un ou plusieurs algorithmes dédiés, en générant un code de retour (31), qu'il envoie audit dispositif de lecture (2) ;
• ledit dispositif de lecture (2) est apte à envoyer ledit code de retour (31) reçu dudit
serveur (3) à ladite microplaquette (1) ;
**caractérisé en ce que**
ladite microplaquette (1) est apte à traiter ledit code de retour (31) reçu dudit dispositif de lecture (2) avec un ou plusieurs algorithmes et à envoyer une réponse de reconnaissance ou non-reconnaissance audit dispositif de lecture (2) ;
le code de retour (31) étant reconnu uniquement par ladite microplaquette (1) qui a généré l'unique code d'identification initial (11), le code de retour (31) étant lié au code d'identification (11) par le système d'algorithmes.

2. Système selon la revendication 1, **caractérisé en ce que** ledit dispositif de lecture (2) est associé à un téléphone portable, smartphone, tablette ou autre dispositif électronique doté de technologie NFC comprenant au moins un circuit de réception et transmission de données à travers au moins un module NFC et/ou GSM et/ou UMTS et/ou Internet ou similaire, à travers duquel il dialogue avec ledit serveur (3).

3. Système selon la revendication 1, **caractérisé en ce que** ledit dispositif de lecture (2) est connecté par câble ou sans fil audit serveur (3).

4. Système selon la revendication 3, **caractérisé en ce que** ledit dispositif de lecture (2) et ledit serveur (3) sont intégrés dans un seul dispositif, portable ou non portable.

5. Système selon l'une quelconque des revendications précédentes, **caractérisé en ce que** ladite microplaquette (1) reconstruit le(s) algorithme(s) afin de reconnaître ledit code de retour (31) et ledit serveur (3), et une fois reconnu, envoie en retour un code final (12) audit dispositif de lecture (2) en communicant la reconnaissance réussie ou échouée de l'objet en question.

6. Système selon l'une quelconque des revendications précédentes, **caractérisé en ce que** ledit dispositif de lecture (2) comprend au moins une application logicielle dédiée ou « App » pour la transmission de données de/a ladite microplaquette (1) et de/au ledit serveur (3), dans lequel ladite application logicielle est installée dans ledit dispositif de lecture (2) au moyen d'une connexion par câble ou sans fil à un terminal autorisé local ou distant.

7. Système selon l'une quelconque des revendications précédentes, **caractérisé en ce que** ledit serveur (3) est un FTP centralisé pour la réception, transmission, traitement et stockage de données.

8. Système selon l'une quelconque des revendications précédentes, **caractérisé en ce que** ledit échange de codes (11, 31, 12) se produit en temps réel.

9. Système selon l'une quelconque des revendications précédentes, **caractérisé en ce que** ladite microplaquette (1) et ledit serveur (3) sont chacun aptes à transmettre mutuellement deux ou plusieurs desdits codes (11, 31) par le biais dudit dispositif de lecture (2).

10. Système selon l'une quelconque des revendications précédentes, **caractérisé en ce qu'**il comprend une carte externe protégée connectée audit serveur (3) et dans lequel ledit serveur (3) transmet lesdits codes (11) reçus dudit dispositif de lecture (2), et dans lequel ladite carte est apte à générer ledit code de retour (31) qu'il envoie audit serveur (3).
